# EUROPEAN PATENT APPLICATION

(11) **EP 1 577 794 A1**
(43) Date of publication of application: **21.09.2005**
(21) Application number: 04101061.2
(22) Date of filing: 16.03.2004
(51) Int. Cl.: G06F 17/30

(54) **Method of updating and returning database objects**

(71) Applicant: SAP AG, 69190 Walldorf (DE)
(72) Inventor: Brückner, Michael, 68789, St.Leon-Rot (DE); Moritz, Rainer, 69115, Heidelberg (DE)

(57) **Abstract**

This invention relates to a method of updating values of objects stored in database applications and an apparatus for data processing performing the method. The method includes the steps of enabling a user to change the value of a first database object displayed on a user interface 120, sending a request to the database server to update the changed value of the first database object 130,150, recalculating and updating the values of further database objects related to the first database object 170 and returning changed database objects 170 and their respective values according to a filter.

## Description

### Technical Field

This invention relates to a method of updating values of objects stored by database applications and an apparatus for data processing performing the method.

### Background Art

Demand planning (DP) is an application component in the SAP's Advanced Planner and Optimizer (APO) that allows to forecast market demand for a company's products and produces a demand plan accordingly.

APO Demand Planning uses historical data on turnover to calculate future requirements and demands. Requirements and demands spanning the whole supply chain (DP -> SNP -> PP/DS) are estimated. The APO DP includes a library of statistical forecasting and advanced macro techniques, which allows for creating forecasts based on demand history as well as any number of causal factors. It uses a consensus-based approach to consolidate the results. Adjustments resulting from interactive planning books, marketing intelligence and management decisions can be added.

Demand Planning features its own master data and uses a bucket oriented planning profile with a granularity of weeks to months. Usually the planning horizon spans from approximately 2 to 3 years in the past and reaching to approximately 2 to 3 years into the future. Data is stored in a database using a time series data structure. All planning relevant parameters are represented by key figures. Their quantity and meaning depend on the context and can be configured to a great extend. Key figures may include sales volume in past periods, corrected sales volume, prognoses, etc.

A typical application within Demand Planning is the interactive planning. A planner (user) works with a planning grid that displays the relevant planning data. The application enables the user to interactively change values of selected objects. Upon changes by the user the planning grid is updated to reflect all changes in the planning grid associated with the user change.

If the value of an object gets changed during interactive planning, the change is sent to the database application for storing. Then interactive planning rereads all data of the current selection from the database application to update the planning grid displayed on the screen. The reason to reread all currently displayed data relies on the fact that in the database application a propagation logic will recalculate the values of all objects that are related to the object with the changed value. The application, e.g. interactive planning, is not aware of the relation between the objects and cannot know what changes result from the relations between objects. So interactive planning reads all values of the current selection after a change has been made. This procedure is very time-consuming.

Afterwards, the reread data is aligned with the planning grid in order to update only cells were the values actually changed. Alternatively the complete planning grid is refreshed.

Usually only a minor part of all data, which is in current use, is changed by the propagation logic within the database application. So returning all changed objects-value-pairs that were changed would improve performance. But the effort to update the planning grid remains, because each single cell has to be checked and usually much more data than actually needed is returned. It is one object of the invention to speed up the process of updating the values of used objects in the described setting when values of the selected objects get changed by user interaction.

### Disclosure of Invention"

In a method of updating values of objects stored in database applications, updating is enhance by the method including the steps of:
enabling a program application to change the value of a first database object;
sending a request to the database application to update the changed value of the first database object;
updating the first database object in the database with the changed value upon receipt of the request;
recalculating and updating the values of all further database objects related to the first database object;
including a filter with the request, the filter listing database objects,
returning database objects and their respective values according to the filter when changed by the step of recalculating and updating.

By including a filter with the request for updating the database, the amount of data returned is effectively restricted to objects and their values which are currently in use. The process of rereading data from the database in order to refresh the data used by the program application is no longer necessary. The data is effectively refreshed by the application, because all data needed is returned automatically by the database application.

In one embodiment the filter lists all database objects displayed on the user interface and the returned database objects and their values are used for updating the user interface.

Thus the program application receives only the database objects and their values, which are currently displayed on the user interface. By using the filter to restrict the returned database objects, the amount of data transferred between program application and database application and their respective servers is reduced to a minimum and the process to update or refresh the user interface is substantially accelerated due to the reduced volume of data.

In one embodiment when the filter lists no objects, the database application returns all database objects and their respective values that were changed by the step of recalculating and updating.

In another embodiment of the invention the database object includes time series data and key-figures.

In another embodiment of the invention all key-figures and their respective values for a specific time-series when the filter lists that specific time series.

In another embodiment of the invention the database application returns a specific combination of key-figures and time-series and their respective values when the filter lists that specific combination.

In an apparatus for data processing including a user interface controlled by an application server connected to a database server, wherein the user interface displays information provided by the application server and enables users to change selected values of displayed objects, and wherein the application server is equipped to process the changes and to send a request to the database server to update the values of respective objects in the database, and wherein the database server includes means to update the changed values of respective objects in the database, and means to analyse relations between the changed values of respective objects and values of further objects, and means to recalculate and to update the values of further objects according to the relations, filter means are provided by the database server to return all values of further objects recalculated and updated to the application server according to a list of objects included with the request to the database server.

Another embodiment of the invention comprises a computer program product comprising program code means stored on a computer readable medium for performing any one of the methods described above, when the program is run on a computer.

Another embodiment of the invention is an article comprising a computer readable medium that stores executable instructions causing a computer system to perform any one of the methods.

Details of one or more implementations are set forth in the accompanying drawings and the description below. Other features and advantages may be apparent from the description, the drawings, and the claims.

### Brief Description of Drawings

Figure 1 shows schematically an exemplary system landscape provided to carry out the invention.

Figure 2 shows a flow chart for updating values of objects stored by database applications.

Figure 3 is a diagram showing a computer system used to implement current invention.

Figure 4 is a diagram showing the netted structure of the database objects.

### Mode(s) for Carrying Out the Invention

Referring now to the drawings, in which like numerals represent like elements throughout the several figures, aspects of the present invention and the exemplary operating environment will be described.

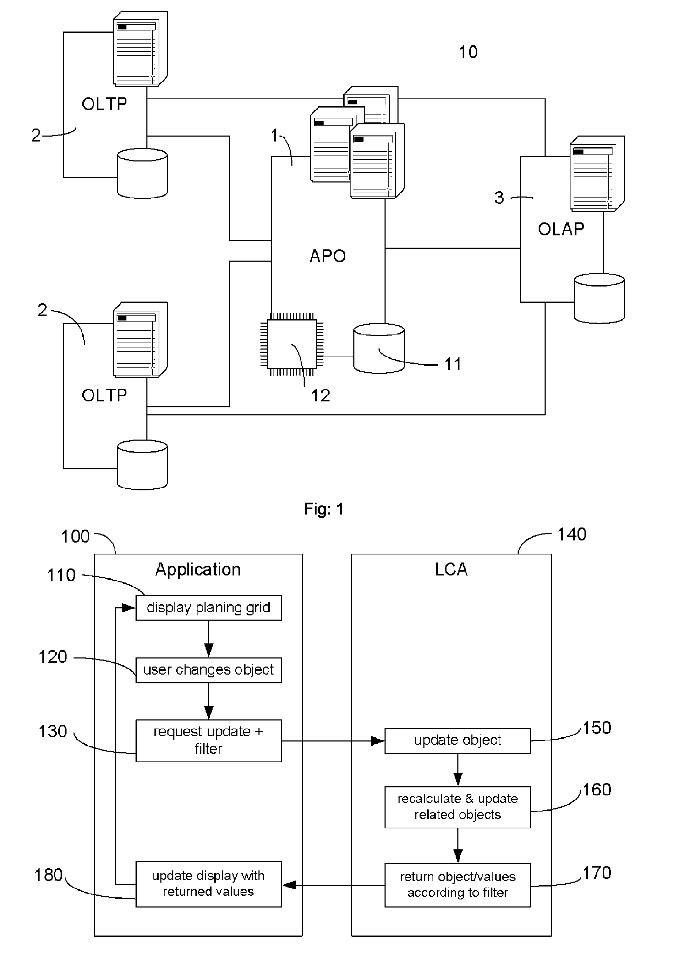

Figure 1 shows schematically the substantial components of an exemplary system landscape to carry out the invention. It consists of an Advanced Planner and Optimizer System 1 and an Online Transaction Processing System 2. Usually an Online Analysis Processing System 3 is also included.

The Advanced Planner and Optimizer System 1, also referred to as APO, consists of several software components: a relational database system 11; a separate, very fast object-oriented database called LiveCache 12; an SAP R/3 Basis; the APO application programs; and a number of programs that execute elaborated optimization algorithms, called the optimizers. These components may run on the same or on different servers.

The LiveCache 12 is a database application for processing large volumes of data in main memory, enabling data sharing among several applications. LiveCache has a very large main memory, behaves like an object oriented and relational database, stores data in optimized structures, allows concurrent data access and leverages parallel and distributed processing using multi-processor and multi-computer technology.

The Online Transaction Processing System 2 covers functionality for sales and distribution, material and inventory management, controlling, shop floor control, logistic execution and so on. There may be more than one Online Transaction Processing System, which may run on different servers.

The optional Online Analysis Processing System 3, such as a Business Warehouse System, provides cumulated historical data that may serve as a basis for extrapolation purposes in planning processes.

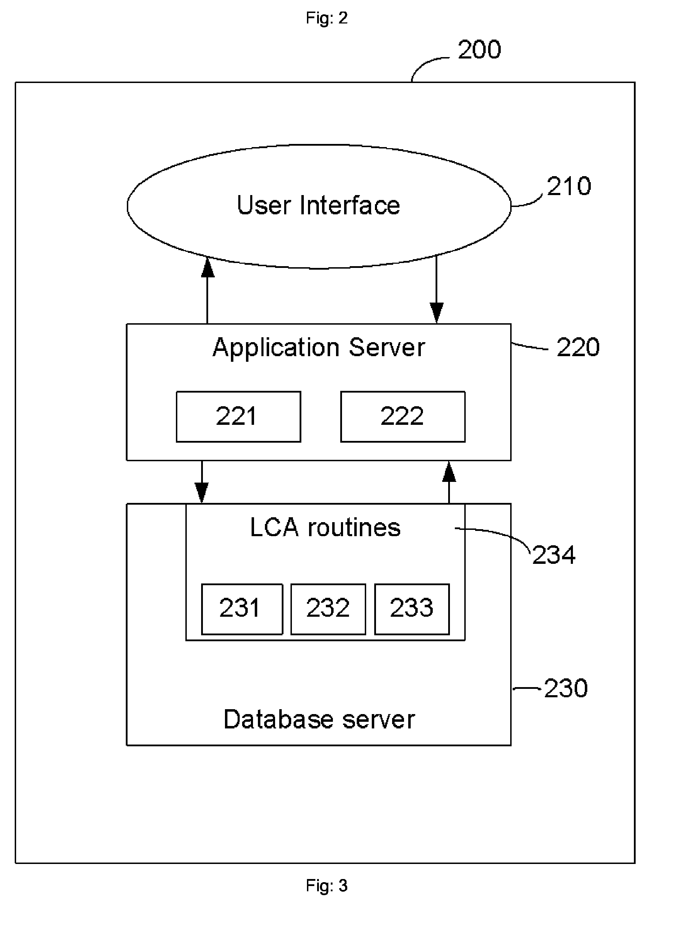

Figure 2 shows a flow chart showing the planning process using interactive planning in application 100. To enable collaboration of the APO system 1 with the OLPT system 2 master data and integration model are set up in the OLTP system 1. This step may require the interaction with a professional user of the system. Then the master data are transferred to the APO system 2 and used to set up the master data in the APO system. The master data in the APO system together with more information gathered by further user interaction provide the basis for creating a demand plan at finished product level (or requirement level). Finally the demand plan is released to Supply Net Planning / Production Planning - Detailed Scheduling SNP/PP-DS.

An exemplary application in Demand Planning is the interactive planning 100. In a first step 110 interactive planning displays a so called planning grid on a user interface and enables the user to change the values of selected planning objects to view the results. According to a selection made by a user the planning grid includes all data that is relevant to the current planning situation. The user interface enables the user to make changes to values of selected objects and to save these changes in step 120. After a change occurred the application program sends a request to the database application to database application 140 in step 130. Together with the request a filter listing all database objects the program application is interested in, is send to the database application.

Upon receipt of the request and the filter the database application 140 uses its LCA routines to update the value of the changed object in step 150. In step 160 the propagation logic searches for all related objects and their dependencies and recalculates their values accordingly. Finally the database application returns the values of all changed objects includes by the filter to the program application 100 in step 170.

Upon receipt of the returned objects and values the program application updates the planning grid displayed by the user interface in step 180 using the returned values.

To minimize efforts only data changed and required by current display are transferred according to a filter, which is passed alongside with the request for changes. The filter indicates the required objects.

The filter is used in conjunction with setting of data as well as in transferring a simulation. In each case the returned values are restricted to changed objects.

The filter may include an arbitrary number of entries. Each entry describes a time-series key-figure combination for which the application /caller request returning of changed values.

If the filter is empty, all changed data will get returned. There may be an additional switch, which enables the function as such.

If a filter element describes only the time series and omits the key figure, all changed key figures of time series are returned, if changed.

If a filter element is complete e.g. it describes the time series and the key figure, the changed data if this specific combination is returned when present.

If the filter entry includes a reference to the units of the key figure, the returned data will be in that specific units.

Figure 3 shows an architecture incorporating an embodiment of the present invention. A system 200 is shown on which the process described may be implemented, in particular the data flow and data processing steps initiated by the apparatus and method of an embodiment of the present invention are shown with respect to interactive planning. The data processing apparatus 200 for includes a user interface 210 with which a user interacts. The user interface is controlled by an application server 220. The application server includes means 221 to receive data and requests from and to send data to the user interface. The application server 220 includes means 222 to send data and request to and to receive data from the database server 230.

When the user changes selected values of displayed objects on the user interface (210) the application server 220 will pass a request to update the database through means 221 to receive data and requests from the user interface and means 222 to send data and request to the database server 230. The request include a list of all objects stored by the database server which the application server requires to update the user interface.

The database server 230 includes means to update 231 for updating the changed values of respective objects in the database upon request from the application server. The database server 230 further includes update means 232 for analyzing relations between the changed and further objects. The update means 232 include procedures to recalculate and update the values of further objects according to the relations.

Finally Filter means 233 are provided by the database server to return all values of further objects recalculated and updated to the application server according to a list of objects included with the request to the database server.

A system 200 is shown on which the process described may be implemented, in particular the data flow and data processing steps initiated by the apparatus and method of an embodiment of the present invention are shown with respect to interactive planning.

The system 200 further typically includes a database server 230. Data is usually accessed by means of a programming system 234 for running Live Cache Application (LCA) routines 231-233. The LCA routines receive a request or an input of data from the application server 220. Furthermore, the LCA routines deliver data to the application server 220. Another function of the LCA routines is to carry out data transformation and data calculation.

The application server comprises a plurality of applications 221, 222. A first application 221 is typically adapted to carry out the request processing which is input by the user interface 210. At this level the user request is processed without processing the actual data. A second application 222 is typically adapted to carry out the data processing and communication with the database application.

It will be understood that depending on the other applications comprised in the system 100, the system will include a plurality of GUIs and applications. Although, only one GUI and application are shown in Figure 3 other GUIs and applications may also be comprised in the system.

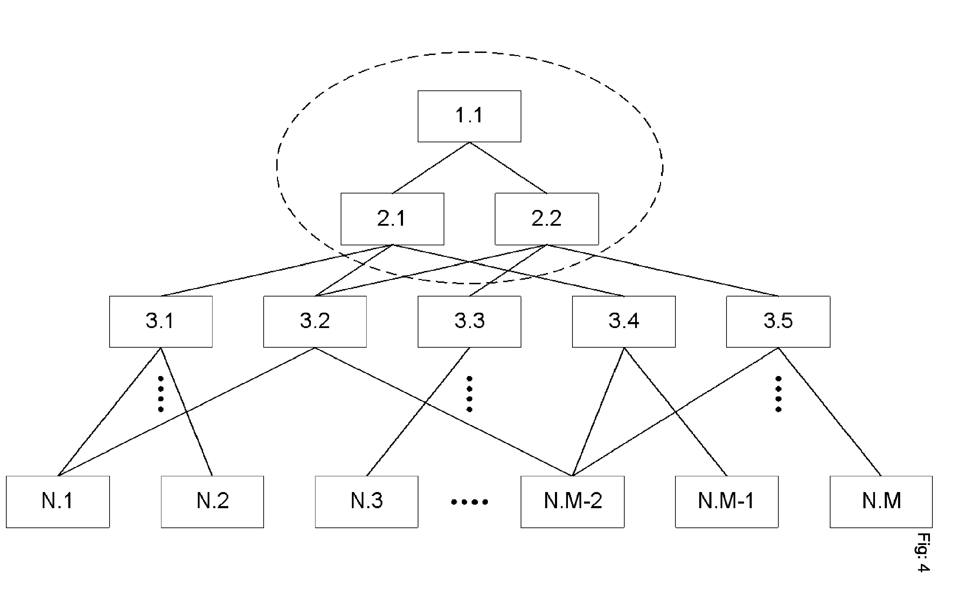

Figure 4 is a diagram showing the netted structure of exemplary database objects. In the current example, the database objects are structured hierarchically. There are different levels 1-N, each level having distinctive numbers of database objects. In the current example there is one database object in the first level, two in the second level, five the in third level, and finally M in Nth level. The lines connecting respective database objects in subsequent levels symbolize dependencies between the database objects. Changes in one object would result in changes for all related objects. For example : if database objects 1.1, 2.1 and 2.2 are currently used by the application program, which may be an interactive planning grid, and one of the data records gets changed in due course, the process of updating and saving the changes will result in the LCA routine, in the current example the propagation logic routine, to check all the dependencies and recalculating all dependent database objects in all levels 1 to N. After the recalculating the application needs to have and update of the data records that are currently in use. Instead of re-reading database objects 1.1, 2.1 and 2.2 separately from the database, the application passes a list of objects together with the request to save and gets the updated values returned as described above

The invention as described can be implemented in digital electronic circuitry, or in computer hardware, firmware, software, or in combination thereof. An apparatus according to the present invention can be implemented in a computer program product tangibly embodied in a machine readable storage device for execution by a programmable processor; and method steps of the invention can be performed by a programmable processor executing a program of instructions to perform functions of the invention by operating on input data and generating output. The invention can be implemented in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Typically, a processor will receive instructions and data from a read-only memory and/or a random access memory. Typically, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example, semiconductor memory devices, such as EEPROM, and flash memory devices; magnetic disks such as internal hard disks and removable disks; magneto-optical disks; and CD-ROM disks. Any of the foregoing can be supplemented by, or incorporated in ASICs (application specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

Whilst specific embodiments of the invention have been described above, it will be appreciated that the invention may be practiced otherwise than as described. In the embodiments described certain products, characteristics and other parameters are referred to. The present invention is not limited to these particular products etc, and these are given by way of example only. The present invention has broad application to the demand planning of any product including configurable products. The description is not intended to limit the invention. For example, the order steps be performed of the present invention is not limited to that order prescribed in the claims.

A number of embodiments of the invention have been disclosed. Nevertheless, it will be understood that various modifications may be made without departing from the spirit and scope of the invention. For example the filter can also be used in conjunction with the transactional simulation, especially when saving and transferring so called SIM sessions. In the Accordingly, other embodiments are within the scope of the following claims.

## Claims

1. Method of updating values of objects stored in database applications, the method including the steps of:
enabling to change the value of a first database object in a program application;
sending a request from the program application to the database application to update the changed value of the first database object;
updating the first database object in the database with the changed value upon receipt of the request;
recalculating and updating the values of further database objects related to the first database object;
**characterized in**,
including a filter with the request, the filter listing database objects,
returning database objects and their respective values according to the filter when changed by the step of recalculating and updating.

2. Method according to claim 1, **characterized by** the filter listing all database objects displayed on a user interface and updating the user interface using the returned database objects and their values

3. Method according to claim 1, **characterized by** returning all database objects and their respective values that were changed by the step of recalculating and updating when the filter lists no objects.

4. Method according to claim 1 or 2, **characterized by** the database object including time series data and key-figures.

5. Method according to claim 4, **characterized by** returning all key-figures and their respective values for a specific time-series when the filter lists that specific time series.

6. Method according to claim 4, **characterized by** returning a specific combination of key-figures and time-series and their respective values when the filter lists that specific combination.

7. Apparatus (200) for data processing including:
a user interface (210) controlled by an application server (220) connected to a database server (230), wherein
the user interface (210) displays information provided by the application server (220) and enables users to change selected values of displayed objects,
the application server (220) is equipped to process the changes (221) and to send a request (222) to the database server (230) to update the values of respective objects in the database,
the database server (230) includes means to update (231) the changed values of respective objects in the database, and means to analyse relations between the changed values of respective objects and values of further objects, to recalculate and to update (232) the values of further objects according to the relations,
**characterized by**
filter means (233) provided by the database server to return all values of further objects recalculated and updated to the application server according to a list of objects included with the request to the database server.

8. Computer program product comprising program code means stored on a computer readable medium for performing the method of any one of the claims 1 to 6 when the program is run on a computer.

9. An article comprising a computer readable medium that stores executable instructions causing a computer system to perform the method of any one of the claims 1 to 6.
